(19) Europäisches Patentamt
European Patent Office
Office européen des brevets

(11) Veröffentlichungsnummer: **0 159 294**
**B1**

# (12) EUROPÄISCHE PATENTSCHRIFT

(45) Veröffentlichungstag der Patentschrift: **17.11.88**

(51) Int. Cl.⁴: **C 07 F 9/15**

(21) Anmeldenummer: **85810157.9**

(22) Anmeldetag: **11.04.85**

## (54) Verfahren zur Herstellung cyclischer Phosphorigsäureester.

(30) Priorität: **17.04.84 CH 1945/84**
**26.06.84 CH 3066/84**

(43) Veröffentlichungstag der Anmeldung:
**23.10.85 Patentblatt 85/43**

(45) Bekanntmachung des Hinweises auf die Patenterteilung:
**17.11.88 Patentblatt 88/46**

(84) Benannte Vertragsstaaten:
**BE CH DE FR GB IT LI NL**

(56) Entgegenhaltungen:
**SU - A - 485 120**
**SU - A - 550 399**
**US - A - 3 968 188**

**KIRK-OTHMER, ENCYCLOPEDIA OF CHEMICAL TECHNOLOGY, 3rd ed., vol. 5, pp. 52-69, J. WILEY & SONS, NEW YORK 1979**

(73) Patentinhaber: **CIBA-GEIGY AG, Klybeckstrasse 141, CH-4002 Basel (CH)**

(72) Erfinder: **Illy, Hugo, Dr., Hubackerweg 35, CH-4153 Reinach (CH)**
Erfinder: **Schliebs, Björn, Dr., Im Schmidtfeld 1, D-6145 Lindenfels-Glattbach (DE)**
Erfinder: **Hess, Wilhelm, Neutschergrund 9, D-6104 Seeheim 3, Jugenheim (DE)**

**EP 0 159 294 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein neues Verfahren zur Herstellung von Pentaerythritestern von Phosphorigsäurederivaten.

Die Umersterung von Pentaerythrit mit Triphenylphosphit und nachträgliche Umesterung mit Dialkylphenolen zu entsprechenden Di-(dialkylphenol)-pentaerythrit-diphosphiten ist allgemein bekannt. Es ist aber auch bekannt, dass diese Produkte immer Phenolreste enthalten, die zu grossen Geruchsproblemen führen. Im US-Patent 4 290 976 wird vorgeschlagen Phenole dadurch auszuschliessen, dass man durch Umsetzung von Dichlorpentaerythritdiphosphit mit Alkanolen Dialkyl-pentaerythrit-diphosphite herstellt. Ausserdem werden zum Abfangen des sich bildenden Chlorwasserstoffs grössere Mengen an geeigneten Säureacceptoren wie Aminen und Alkalisalzen eingesetzt. Bei der Herstellung des Dichlorpentaerythrit-diphosphit wie sie z.B. in US-Patent 3 192 242 beschrieben ist, bilden sich jedoch schwer abzutrennende Nebenprodukte. Gemäss US-Patent 3 968 188 kann die Bildung solcher störender Nebenprodukte stark zurückgedrängt werden, wenn die Umsetzung von Pentaerythrit mit $PCl_3$ in Gegenwart eines Metallhalogenids oder eines tertiären Amins als Katalysator durchgeführt wird.

Es hat sich nun gezeigt, dass die Ausbeute überraschenderweise noch beträchtlich verbessert werden kann, wenn man die Umsetzung von Pentaerythrit mit $PCl_3$ mit einem quaternären Salz oder einem Polyether katalysiert. Es wurde weiterhin gefunden, dass bei der Verwendung eines solchen Katalysators das Phenol direkt zu Beginn der Umsetzung von Pentaerythrit mit dem Phosphortrihalogenid eingesetzt und somit in einer Stufe das entsprechende Diphenol-pentaerythrit-diphosphit erhalten werden kann.

Die vorliegende Erfindung betrifft demnach ein Verfahren zur Herstellung von Pentaerythritestern von Phosphorigsäurederivaten der Formel I

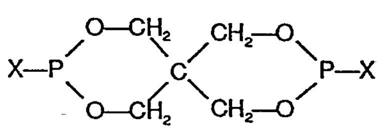

(I),

worin X eine Gruppe der Formel II

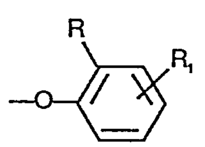

(II)

bedeutet, R und $R_1$ unabhängig voneinander Wasserstoff oder $C_1$–$C_8$ Alkyl sind, durch Umsetzung in einem inerten organischen Lösungsmittel von Pentaerythrit mit einem Phosphortrihalogenid und mit einem Phenol der Formel III

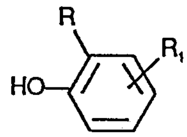

(III)

dadurch gekennzeichnet, dass die Umsetzung in Gegenwart eines Katalysators ausgewählt aus der Gruppe bestehend aus quaternären Ammonium-, Phosphonium-, Arsonium-, Pyrdinium-, Piperazinium- und Thiazoliumsalzen, tertiären Sulfoniumsalzen, Kronenethern und linearen Polyethern, in einer Menge von 0,5 bis 20 Mol-% bezogen auf das Pentaerythrit, durchgeführt wird, wobei das Phenol der Formel III zu Beginn, während oder nach der Umsetzung von Pentaerythrit mit dem Phosphortrihalogenid eingesetzt werden kann.

Es ist also möglich die Umsetzung von Pentaerythrit mit dem Phosphortrihalogenid in Gegenwart eines der oben definierten Katalysatoren bis zur Bildung der Verbindung der Formel I, worin X Chlor oder Brom ist, durchzuführen, welche anschliessend, ohne isoliert zu werden, weiter umgesetzt werden kann, oder aber das Phenol der Formel III bereits zu Beginn oder während der Umsetzung von Pentaerythrit mit dem Phosphortrihalogenid einzusetzen und somit die Verbindung der Formel I in einer Stufe zu erhalten.

Wenn ein festes Phenol der Formel III eingesetzt wird, so soll es vorzugsweise vorgelegt werden, unabhängig davon, ob die Umsetzung von Pentaerythrit mit dem Phosphortrihalogenid gleichzeitig oder im voraus durchgeführt wird.

Ein grosser Vorteil des erfindungsgemässen Verfahrens besteht darin, dass das in reiner Form unstabile Dihalogenid-Zwischenprodukt nicht isoliert werden muss.

Von besonderem Interesse ist das erfinderische Verfahren zur Herstellung von Verbindungen der Formel I, wobei das Phenol der Formel III zu Beginn der Umsetzung von Pentaerythrit mit dem Phosphortrihalogenid eingesetzt wird.

Geeignete Phosphortrihalogenide sind z.B. $PBr_3$ und insbesondere $PCl_3$. Das bevorzugte molare Verhältnis von Phosphortrihalogenid zu Pentaerythrit beträgt ca. 2:1.

R und $R_1$ sind als $C_1$–$C_8$ Alkyl z.B. Methyl, Ethyl, Propyl, Isopropyl, n-Butyl, sek.Butyl, tert.Butyl, Pentyl, Hexyl, n-Octyl, 2-Ethylhexyl, 1,1,3,3-Tetramethylbutyl. Bevorzugt ist $R_1$ in p-Stellung zum Sauerstoff. R ist bevorzugt verzweigtes $C_3$-$C_8$ Alkyl und insbesondere tert.Butyl und $R_1$ ist bevorzugt Methyl oder tert.Butyl.

Die quaternären Ammonium-, Phosphonium-, Arsonium-, Pyridinium-, Piperazinium-, Thiazolium- und die tertiären Sulfoniumsalze, die Kronenether und die linearen Polyether die als Katalysatoren für das erfindungsgemässe Verfahren geeignet sind, sind als Phasentransfer-Katalysatoren allgemein bekannt und im Handel erhältlich. Als Beispiel seien folgende angegeben:

Benzyldimethylhexadecylammoniumchlorid,
Benzyldimethyltetradecylammoniumchlorid,
Benzyldimethyltetradecylammoniumbromid,

Benzyltributylammoniumbromid, Benzyltributylammoniumchlorid, Benzyltriethylammoniumbromid, Benzyltriethylammoniumchlorid, Benzyltriethylammoniumiodid, Benzyltriethylammoniumtetrafluorborat, Benzyltrimethylammoniumbromid, Benzyltrimethylammoniumchlorid, Benzyltrimethylammoniumhydroxid, Benzyltriethylammoniumhydroxid, Benzyltrimethylammoniummethoxid, Benzyltriphenylphosphoniumbromid, Bis(tetramethylammonium)sulfate, Butyltriphenylphosphoniumbromid, Butyltripropylammoniumbromid, 12-Crown-4, 15-Crown-5, 18-Crown-6, Dibenzo-18-crown-6, Dibenzo-24-crown-8, Dicyclohexano-18-crown-6, Dicyclohexano-24-crown-8, Diethylmethylpropylammoniumbromid, (Diisobutylcresoxyethyl)dimethylbenzyl-ammoniumchlorid, (Diisobutylphenoxyethoxyethyl)dimethylbenzy-lammoniumchlorid, Dimethylethyldodecylammoniumbromid, Dimethylethylhexadexylammoniumbromid, Dimethylethylpropylammoniumbromid, 3,4-Dimethyl-5-(2-hydroxyethyl)thiazoliumiodid, 1,1-Dimethyl-4-phenylpiperaziniumiodid, Dimethyltetraglykol, Dodecylethyldimethylammoniumbromid, 1-Butylpyridiniumbromid, 1-Heptylpyridiniumbromid, 1-Dodecylpyridiniumbromid, Decyltriethylammoniumbromid, Hexadecyltriethylammoniumbromid, Hexadecyltrimethylammoniumbromid, Ethyldimethylpropylammoniumbromid, Ethylhexadecyldimethylammoniumbromid, 3-Ethyl-5-(2-hydroxyethyl)-4-methylthiazoliumbromid, Ethyltriphenylphosphoniumbromid, Heptyltributylammoniumbromid, Hexadecylpyridiniumbromid, Hexadecylpyridiniumchlorid, Hexyltriethylammoniumbromid, Hexadecyltributylphosphoniumbromid, Hexadecyltrimethylammoniumbromid, Hexadecyltrimethylammoniumchlorid, 2-Hydroxyethyltrimethylammoniumchlorid, 2-Hydroxyethyltrimethylammoniumchlorid, 2-Hydroxyethyltrimethylammoniumhydroxid, 2-Hydroxyethyltrimethylammoniumiodid, Methyltributylammoniumbromid, Methyltributylammoniumchlorid, Methyltributylammoniumhydroxid, Methyltributylammoniumiodid, Methyltriethylammoniumbromid, Methyltrioctylammoniumbromid, Methyltrioctylammoniumchlorid, Methyltrioctylammoniumiodid, Methyltriphenylphosphoniumbromid, Octadecyltrimethylammoniumbromid, Pentyltributylammoniumbromid, Phenyltrimethylammoniumbromid, Phenyltrimethylammoniumchlorid, Phenyltrimethylammoniumhydroxid,

Phenyltrimethylammoniumtribromid, Octyltriethylammoniumbromid, Tetrabutylammoniumacetat, Tetrabutylammoniumborhydrid, Tetrabutylammoniumbromid, Tetrabutylammoniumchlorid, Tetrabutylammoniumcyanat, Tetrabutylammoniumcyanid, Tetrabutylammoniumcyanborhydrid, Tetrabutylammoniumdichromat, Tetrabutylammoniumfluorid-trihydrat, Tetrabutylammoniumhexafluorphosphat, Tetrabutylammoniumhydrogensulfat, Tetrabutylammoniumhydroxid, Tetrabutylammoniumiodid, Tetrabutylammoniummethansulfonat, Tetrabutylammoniumnitrat, Tetrabutylammoniumnitrit, Tetrabutylammoniumperchlorat, Tetradecyltrimethylammoniumbromid, Tetradodecylammoniumbromid, Tetradodecylammoniumperchlorat, Tetraethylammoniumacetat-tetrahydrat, Tetraethylammoniumborhydrid, Tetraethylamoniumbromid, Tetraethylammoniumchlorid-monohydrat, Tetraethylammoniumcyanid, Tetraethylammonium-fluorid-dihydrat, Tetraethylammoniumhexafluorphosphat, Tetraethylammoniumhydrogensulfat, Tetraethylammoniumhydroxid, Tetraethylammoniumiodid, Tetraethylammoniumnitrat, Tetraethylammoniumperchlorat, Tetraethylammoniumtetrafluorborat, Tetraethylammoniumthiocyanat, Tetraheptylammoniumbromid, Tetrahexylammoniumbromid, Tetrahexylammoniumchlorid, Tetrahexylammoniumiodid, Tetrahexylammoniumperchlorat, Tetramethylammoniumbromid, Tetramethylammoniumchlorid, Tetramethylammoniumhexafluorphosphat, Tetramethylammoniumhydroxid, Tetramethylammoniumiodid, Tetramethylammoniumnitrat, Tetramethylammoniumperchlorat, Tetramethylammoniumsulfat, Tetramethylammoniumtetrafluorborat, Tetramethylammoniumtribromid, Tetraoctadecylammoniumbromid, Tetraoctylammoniumperchlorat, Tetrapentylammoniumbromid, Tetrapentylammoniumiodid, Tetraphenylarsoniumchlorid, Tetrabutylphosphoniumchlorid, Tetraphenylphosphoniumbromid, Tetraphenylphosphoniumchlorid, Trioctylethylphosphoniumbromid, Tetrapropylammoniumbromid, Tetrapropylammoniumhydroxid, Tetrapropylammoniumiodid, Tributylheptylammoniumbromid, Tributylhexadecylphosphoniumbromid,

Tributylmethylammoniumbromid,
Tributylmethylammoniummchlorid,
Tributylmethylammoniumhydroxid,
Tributylmethylammoniumiodid,
Tributylpentylammoniumbromid,
Triethylmethylammoniumbromid,
Trimethyloctadecylammoniumbromid,
Trimethylphenylammoniumbromid,
Trimethylphenylammoniumchlorid,
Trimethylphenylammoniumtribromid,
Trimethyltetradecylammoniumbromid,
Trioctylmethylammoniumchlorid,
Tripropylbutylammoniumbromid,
Tetraethylenglykoldimethylether,
1,4,7,10-Tetraoxacyclododecan.

Bevorzugte Katalysatoren sind quaternäre Ammonium- oder Phosphoniumsalze der Formeln

$(R_2)_4N^{\oplus}Y^{\ominus}$ $(R_2)_nP^{\oplus}(R_3)_{4-n}\,Y^{\ominus}$

(IV) (V)

worin $R_2$ $C_1$–$C_8$ Alkyl, $R_3$ Phenyl, Y Chlor oder Brom und n eine Zahl von Null bis 4 bedeuten.

$R_2$ ist als $C_1$–$C_8$ Alkyl z.B. Methyl, Ethyl, Propyl, Isopropyl, n-Butyl, sek.Butyl, tert.Butyl, Pentyl, Hexyl, Octyl. Bevorzugt ist geradekettiges Alkyl und insbesondere Ethyl und n-Butyl.

n ist bevorzugt 1. Y ist bevorzugt Brom.

Besonders bevorzugte Katalysatoren sind Butyl-triphenyl-phosphoniumbromid und insbesondere Tetraethyl- und Tetrabutylammoniumbromid.

Der Katalysator wird bevorzugt in Mengen zwischen 1 und 10 Mol-%, insbesondere zwischen 1,5 und 7 Mol-%, bezogen auf das Pentaerythrit, bei Temperaturen zwischen 20 und 100°C, bevorzugt zwischen 30 und 80°C, bei Normaldruck oder unter vermindertem Druck während 2 bis 9 Sekunden eingesetzt.

Geeignete Lösungsmittel sind z.B. aromatische Kohlenwasserstoffe, wie Benzol, Toluol und insbesondere Xylol oder Gemische von aliphatischen mit aromatischen Kohlenwasserstoffen.

Die Aufarbeitung des erhaltenen Produktes wird nach üblichen Methoden vorgenommen.

Die Verbindungen der Formel I sind wertvolle Stabilisatoren für organische Materialien, die der Zersetzung unterworfen sind, vorzugsweise für synthetische Polymere.

Die folgenden Beispiele erläutern die Erfindung ohne sie einzuschränken.

Beispiel 1

In einem mit HCl-Absorber versehenen 2 l-Reaktionskolben werden 95,4 g (0,7 Mol) Pentaerythrit, 4,8 g (0,014 Mol) Tetrabutylammoniumbromid und 240 g Toluol eingefüllt. Die Suspension wird gut gerührt und unter Durchleiten von Stickstoff auf ca. 40°C erwärmt. Innert 3 bis 3½ Stunden werden dann 200 g (1,45 Mol) Phosphortrichlorid regelmässig zugetropft und die Reaktionsmischung eine Stunde bei 38 bis 40°C weitergerührt. Danach wird die Temperatur innert einer Stunde auf 65°C erhöht und weitere zwei Stunden bei 65 bis 70°C gerührt. Anschliessend werden bei einem Vakuum von 200 bis 150 mbar ca. 45 g Toluol und Spuren von überschüssigem Phosphortrichlorid abdestilliert. Die abdestillierte Menge wird durch die gleiche Menge an frischem Toluol ersetzt.

Die so geklärte Lösung wird auf 65 bis 70°C erwärmt und bei dieser Temperatur 302 g (1,46 Mol) 2,4-Di-tert.butylphenol, in 100 g Toluol gelöst, innert einer Stunde zugetropft und eine Stunde weitergerührt. Danach werden ca. 250 g Toluol unter leichtem Vakuum abdestilliert und durch 365 g Isopropanol ersetzt. Die erhaltene Kristallsuspension wird bei Raumtemperatur filtriert und mit Isopropanol auf dem Filter gewaschen. Nach dem Trocknen im Vakuum erhält man 340 g 3,9-Bis(2,4-di-tert.butylphenoxy-2,4,8,10-tetraoxa-3,9-diphosphaspiro[5.5]undecan mit einem Schmelzpunkt von 178 bis 179°C.

Beispiel 2

In einem mit HCl-Absorber versehenen 500 ml-Reaktionskolben werden 40,8 g (0,3 Mol) Pentaerythrit, 123,8 g (0,6 Mol) 2,4-Di-tert.butylphenol und 3 g (0,014 Mol) tetraethylammoniumbromid in 45 ml Xylol suspendiert. Bei einer Temperatur von 15 bis 25°C werden 82,3 g (0,6 Mol) Phosphortrichlorid gleichmässig in einer Stunde zugegeben. Danach wird die Temperatur in zwei Stunden gleichmässig auf 70°C erhöht. Anschliessend wird ein Druck von 120 mbar eingestellt. Druck und Temperatur werden zwei Stunden lang gehalten. Dann werden 200 ml Xylol zugegeben, um das Produkt bei 80°C zu lösen. Die Lösung wird in einen Destillationskolben filtriert. Der Filterrückstand wird zweimal mit jeweils 50 ml Xylol gewaschen. Bei 80°C und 120 mbar werden ca. 300 ml Xylol abdestilliert, bis die Grenze der Rührfähigkeit erreicht ist. Dann werden rasch 400 ml Isopropanol zugegeben und die Suspension 15 Minuten unter Rückfluss bei 80°C gerührt. Danach wird auf 20 bis 25°C abgekühlt, das Produkt filtriert und zweimal mit jeweils 70 ml Isopropanol gewaschen, und der Filterinhalt bei 70°C unter Vakuum getrocknet. Man erhält 133,3 g 3,9-Bis-(2,4-di-tert.-butylphenoxy)-2,4,8,10-tetraoxa-3,9diphosphaspiro[5.5]undecan mit Schmelzpunkt 174 bis 177°C.

## Patentansprüche

1. Verfahren zur Herstellung von Pentaerythritestern von Phosphorigsäurederivaten der Formel I

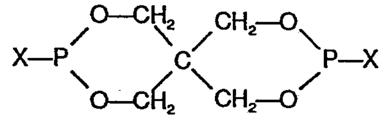

(I),

worin X eine Gruppe der Formel II

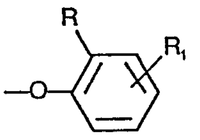

(II)

bedeutet, R und $R_1$ unabhängig voneinander Wasserstoff oder $C_1$–$C_8$ Alkyl sind, durch Umsetzung in einem inerten organischen Lösungsmittel von Pentaerythrit mit einem Phosphortrihalogenid und mit einem Phenol der Formel III

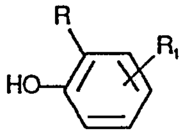

(III)

dadurch gekennzeichnet, dass die Umsetzung in Gegenwart eines Katalysators ausgewählt aus der Gruppe bestehend aus quaternären Ammonium-, Phosphonium-, Arsonium-, Pyridinium-, Piperazinium- und Thiazoliumsalzen, tertiären Sulfoniumsalzen, Kronenethern und linearen Polyethern, in einer Menge von 0,5 bis 20 Mol-% bezogen auf das Pentaerythrit, durchgeführt wird, wobei das Phenol der Formel III zu Beginn, während oder nach der Umsetzung von Pentaerythrit mit dem Phosphortrihalogenid eingesetzt werden kann.

2. Verfahren gemäss Anspruch 1, dadurch gekennzeichnet, dass das Phenol der Formel III zu Beginn der Umsetzung von Pentaerythrit mit dem Phosphortrihalogenid eingesetzt wird.

3. Verfahren gemäss Anspruch 1, dadurch gekennzeichnet,dass das Phosphortrihalogenid $PCl_3$ ist.

4. Verfahren gemäss Anspruch 2, dadurch gekennzeichnet, dass $R_1$ in den Formeln II und III in p-Stellung zum Sauerstoff ist und R und $R_1$ in den Formeln II und III tert.Butyl bedeuten.

5. Verfahren gemäss Anspruch 1, dadurch gekennzeichnet, dass als Katalysator ein Ammonium- oder Phosphoniumsalz der Formel IV oder V.

$(R_2)_4N^{\oplus}Y^{\ominus}$ $(R_2)_nP^{\oplus}(R_3)_{4-n}\,Y^{\ominus}$

(IV) (V)

worin $R_2$ $C_1$–$C_8$ Alkyl, $R_3$ Phenyl, Y Chlor oder Brom und n eine Zahl von Null bis 4 bedeuten, eingesetzt wird.

6. Verfahren gemäss Anspruch 5, dadurch gekennzeichnet, dass $R_2$ Ethyl oder Butyl ist.

7. Verfahren gemäss Anspruch 6, dadurch gekennzeichnet, dass n=1 ist und Y Brom bedeutet.

8. Verfahren gemäss Anspruch 1, dadurch gekennzeichnet, dass die Umsetzung in Gegenwart von Tetraethyl- oder Tetrabutylammoniumbromid durchgeführt wird.

**Claims**

1. A process for the preparation of a pentaerythritol ester of a phosphorous acid derivative of formula I

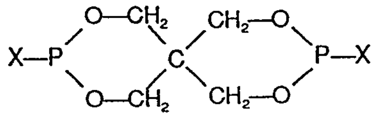

(I),

in which a group of formula II

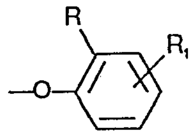

(II)

R and $R_1$ independently of one another are hydrogen or $C_1$–$C_8$alkyl, by reacting, in an inert organic solvent, pentaerythritol with a phosphorous trihalide and with a phenol of formula III

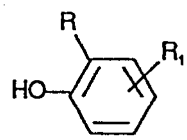

(III)

which process comprises carrying out the reaction in the presence of a catalyst selected from the group consisting of quaternary ammonium, phosphonium, arsonium, pyridinium, piperazinium and thiazolium salts, tertiary sulfonium salts, crown ethers and linear polyethers, in an amount of 0.5 to 20 mol-%, based on pentaerythritol, the phenol of formula III being added at the start of, during or after the reaction of pentaerythritol with the phosphorous trihalide.

2. A process according to claim 1, wherein the phenol of formula III is added at the start of the reaction of pentaerythritol with the phosphorous trihalide.

3. A process according to claim 1, wherein the phosphorous trihalide is $PCl_3$.

4. A process according to claim 2, wherein $R_1$ in formulae II and III is in the p-position to the oxygen, and R and $R_1$ in formulae II and III are tert-butyl.

5. A process according to claim 1, wherein the catalyst employed is an ammonium or phosphonium salt of formula IV or V

$(R_2)_4N^{\oplus}Y^{\ominus}$ $(R_2)_nP^{\oplus}(R_3)_{4-n}\,Y^{\ominus}$

(IV) (V)

in which $R_2$ is $C_1$–$C_8$alkyl, $R_3$ is phenyl, Y is chlorine or bromine, and n is a number from zero to 4.

6. A process according to claim 5, wherein $R_2$ is ethyl or butyl.

7. A process according to claim 6, wherein n is 1, and Y is bromine.

8. A process according to claim 1, wherein the reaction is carried out in the presence of tetraethylammonium bromide or tetrabutylammonium bromide.

## Revendications

1. Procédé pour préparer des esters formés par le pentaérythrol et des dérivés de l'acide phosphoreux, esters qui répondent à la formule I:

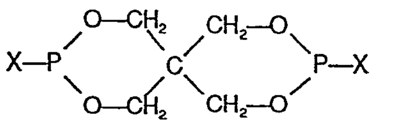

(I),

dans laquelle X représente un radical répondant à la formule II:

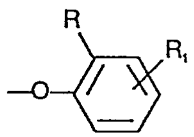

(II)

où R et $R_1$ représentent chacun, indépendamment l'un de l'autre, l'hydrogène ou un radical alkyle en $C_1$–$C_8$, par réaction, dans un solvant organique inerte, du pentaérythrol avec un trihalogénure de phosphore et avec un phénol de formule III:

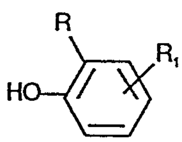

(III)

procédé caractérisé en ce qu'on effectue la réaction en présence d'un catalyseur pris dans l'ensemble constitué par les sels d'ammoniums, de phosphoniums, d'arsoniums, de pyridiniums, de pipéraziniums et de thiazoliums quaternaires, les sels de sulfoniums tertiaires, les éthers couronnes et les polyéthers linéaires, en une quantité de 0,5 à 20% en moles par rapport au pentaérythrol, le phénol de formule III pouvant être introduit au début, pendant ou après la réaction du pentaérythrol avec le trihalogénure de phosphore.

2. Procédé selon la revendication 1 caractérisé en ce que le phénol de formule III est mis en jeu au début de la réaction du pentaérythrol avec le trihalogénure de phosphore.

3. Procédé selon la revendication 1 caractérisé en ce que le trihalogénure de phosphore est $PCl_3$

4. Procédé selon la revendication 2 caractérisé en ce que $R_1$, dans les formules II et III, est en position para relativement à l'oxygène, et R et $R_1$, dans les formules II et III, représentent chacun un radical tert-butyle.

5. Procédé selon la revendication 1 caractérisé en ce qu'on utilise, comme catalyseur, un sel d'ammonium ou de phosphonium répondant respectivement à la formule IV ou à la formule V:

$(R_2)_4N^{\oplus}Y^{\ominus}$ (IV) $(R_2)_nP24^{\oplus}(R_3)_{4-n}Y^{\ominus}$ (V)

dans lesquelles $R_2$ représente un alkyle en $C_1$–$C_8$, $R_3$ un phényle, Y le chlore ou le brome et n un nombre de 0 à 4.

6. Procédé selon la revendication 5 caractérisé en ce que $R_2$ représente un radical éthyle ou butyle.

7. Procédé selon la revendication 6 caractérisé en ce que n est égal à 1 et Y représente le brome.

8. Procédé selon la revendication 1 caractérisé en ce que la réaction est effectuée en présence de bromure de tétraéthylammonium ou de tétrabutylammonium.